# EUROPEAN PATENT APPLICATION

(11) **EP 2 903 305 A1**
(43) Date of publication of application: **05.08.2015**
(21) Application number: 15150581.5
(22) Date of filing: 09.01.2015
(51) Int. Cl.: H04W 4/02, H04W 76/02

(54) **Establishing communication between electronic devices**

(30) Priority: 10.01.2014 US 201414151851
(71) Applicant: Brentwood Equities Ltd, London SW7 1EE (GB)
(72) Inventor: Judge, Jag, Lon, SW7 1EE (GB); Muzmmal, Ahmed, London, SW7 1EE (GB); Ahmad, Irfan, London, SW7 1EE (GB)
(74) Representative: EIP

(57) **Abstract**

A system and method for establishing communication between electronic devices via a network are disclosed. In one embodiment, a first request from a first electronic device is received. Further, a request from at least one other electronic device is received. The first request and the request from the at least one other electronic device are initiated by tapping and holding a button within an application for at least a predefined time in the first electronic device and the at least one other electronic device, respectively. Furthermore, communication is established between the first electronic device and at least one other electronic device when a distance between the first electronic device and the at least one other electronic device is less than a predefined distance and the request from the at least one other electronic device is received within a time interval from time of the first request.

## Description

### TECHNICAL FIELD

Embodiments of the present subject matter relate to a communication system. More particularly, embodiments of the present subject matter relate to establishing communication between electronic devices.

### BACKGROUND

The rapid growth of data transfer is driven by increasing popularity of electronic devices, such as mobile devices, computing devices and so on. The versatile use of the electronic devices set new requirements for facilitating data transfer across several platforms. Few existing methods for data transfer may use a short message service (SMS), an Electronic-mail (e-mail), a multimedia messaging service (MMS) and so on. These methods can be used for transferring data either to a single electronic device or a group of electronic devices. However, these methods may prove to be cumbersome as they require tedious steps like entering details, such as a phone number, an email identity (ID), composing a message and finally sending the message.

Other existing methods for data transfer use Bluetooth technology which may require authentication or pairing of the electronic devices by inputting a personal identification number (PIN) or password. However, electronic devices without Bluetooth technology may not be able transfer data directly. Therefore, the ability to exchange data is qualified by the communication standard that is used.

### SUMMARY

A system and method for establishing communication between electronic devices via a network are disclosed. According to one aspect of the present subject matter, the method includes initiating a request to establish communication between the electronic devices by tapping and holding a button within an application in a first electronic device and at least one another electronic device for a predetermined time. Further, the communication is established between the first electronic device and the at least one another electronic device when a distance between the first electronic device and the at least one another electronic device is less than a predefined distance and a request from the at least one other electronic device is received within a time interval from time of request associated with the first electronic device. For example, the communication is established via the network based on Internet protocol (IP) address and device identity (ID) of the first electronic device and the at least one another electronic device.

According to another aspect of the present subject matter, the system includes a server communicatively coupled to the electronic devices via a network. Further, the server includes a data transfer module configured to perform the method for establishing communication between the electronic devices.

According to yet another aspect of the present subject matter, a computer-readable storage medium including instructions that are configured, when executed by a computing system, to perform the method for establishing communication between the electronic devices.

The system and method disclosed herein may be implemented in any means for achieving various aspects. Other features will be apparent from the accompanying drawings and from the detailed description that follow.

### BRIEF DESCRIPTION OF THE DRAWINGS

Various embodiments are described herein with reference to the drawings, wherein:
FIG. 1A is an example system illustrating initiating requests to establish communication between electronic devices, according to an embodiment;
FIG. 1B is an example application running in the electronic devices for initiating a request, according to an embodiment;
FIG. 2 is an example system illustrating pairing of the electronic devices based on location information and time of request, according to an embodiment;
FIG. 2A is an example illustrating pairing of a smart phone and a swipe machine based on location information and time of request, according to an embodiment;
FIG. 3 is another example system illustrating broadcasting data from a first electronic device to multiple electronic devices via a network, according to an embodiment;
FIG. 4 illustrates a flow diagram of an example method for establishing communication between electronic devices, according to an embodiment; and
FIG. 5 is a block diagram illustrating components of a physical computing system including a data transfer module, such as the one shown in FIGS. 1A, 2 and 3, according to an embodiment.

The drawings described herein are for illustration purposes only and are not intended to limit the scope of the present disclosure in any way.

### DETAILED DESCRIPTION

A system and method for establishing communication between electronic devices are disclosed. In one embodiment, the electronic devices at substantially same place and substantially same time can share information, for example, contact information, by pressing a button within an application (app) residing in the electronic devices. The present technique includes two major modules, one being the app running on the electronic devices (e.g., mobile devices, computing devices and so on) and the other being an algorithm (i.e., a data transfer module) running on a cloud (e.g., a server). In one example, upon pressing the button, the app sends a request including location information, time of request, Internet protocol (IP) address, device identity (ID) and/or phone number of the electronic device to the cloud. The algorithm on the cloud receives the requests from the electronic devices from various locations and pairs the electronic devices based on the received information. In other words, the algorithm identifies the electronic devices that are willing to exchange information and connects them. Once a match is found, the server routes the information (e.g. contact information, card/debit card details) and other desirable information between two electronic devices in each pair. Further, the cloud monitors and stores the information exchanged between the electronic devices. The shared information can also be saved on the electronic devices.

In the following detailed description of the embodiments of the present subject matter, references are made to the accompanying drawings that form a part thereof, and in which are shown by way of illustration specific embodiments in which the present subject matter may be practiced. These embodiments are described in sufficient detail to enable those skilled in the art to practice the present subject matter, and it is to be understood that other embodiments may be utilized and that changes may be made without departing from the scope of the present subject matter. The following detailed description is, therefore, not to be taken in a limiting sense, and the scope of the present subject matter is defined by the appended claims.

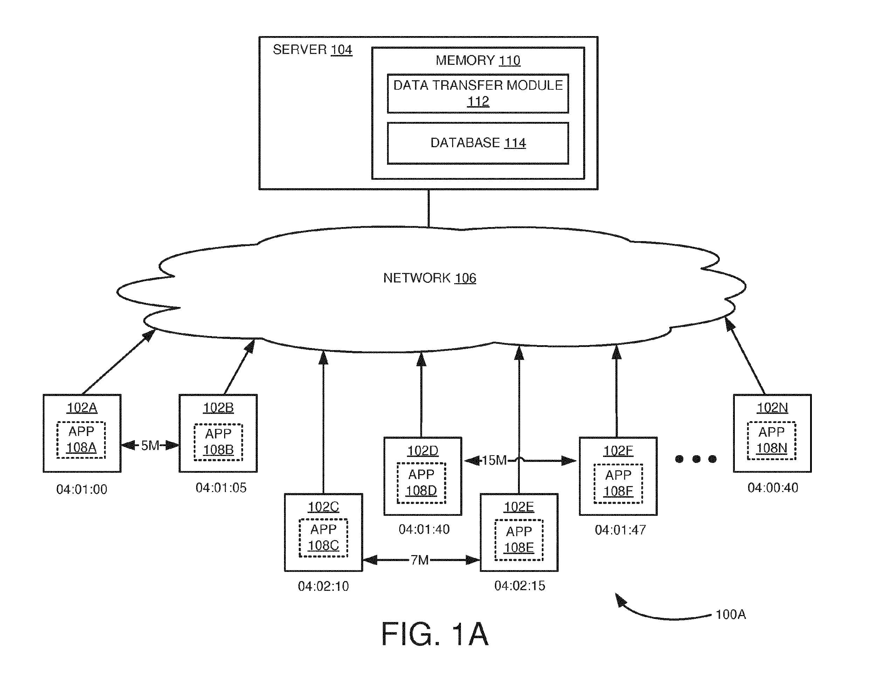

FIG. 1A is example system 100A illustrating initiating requests to establish communication between electronic devices 102A-N, according to an embodiment. As shown in FIG. 1A, system 100A includes electronic devices 102A-N and server 104 communicatively coupled to electronic devices 102A-N via network 106 (e.g., a wireless network). Example electronic devices 102A-N include mobile devices, computing devices, point of sale devices (e.g., till machines and swiping machines) and the like. Further, electronic devices 102A-N include apps 108A-N, respectively, installed therein.

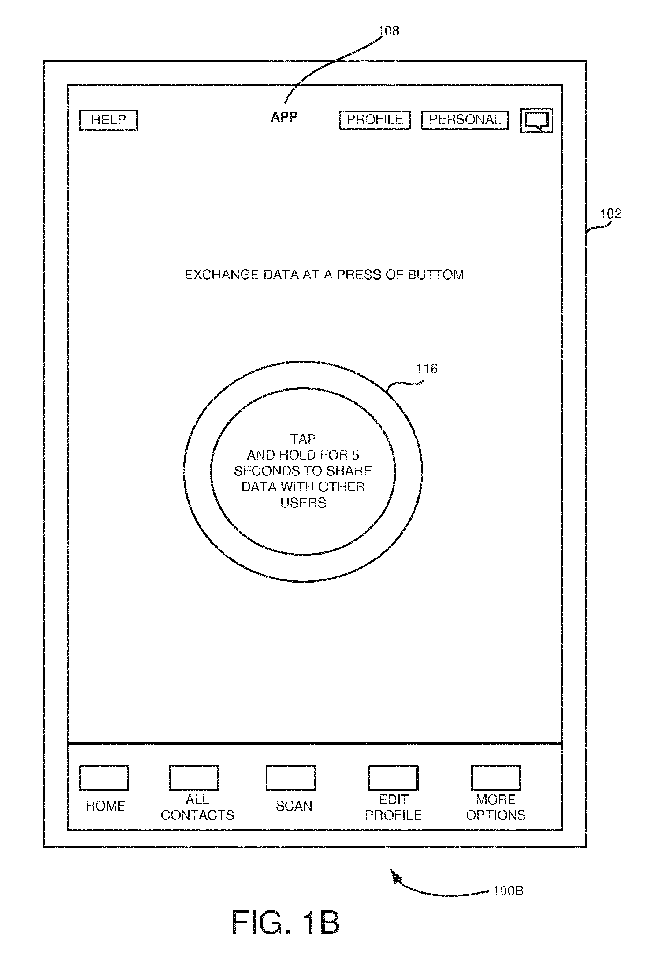

Furthermore, server 104 includes memory 110 which further includes data transfer module 112 and database 114. In operation, data transfer module 112 receives requests from electronic devices 102A-N for establishing communication. Exemplary requests include location information, time of request, an IP address and a device ID associated with electronic devices 102A-N. In one example, the requests are initiated by tapping and holding buttons within apps 108A-N in respective one of electronic devices 102A-N for at least a predefined time. An example app running on electronic devices 102A-N is shown in FIG. 1B. In the following description, the predefined time (e.g., 5 seconds) is used broadly; however, it can also be used to refer to any other time interval (e.g., 5-10 seconds).

Referring now to FIG. 1B, which is example app 108 running in electronic device 102, such as electronic devices 102A-N shown in FIG. 1A, for initiating a request, according to an embodiment. Particularly, FIG. 1B illustrates button 116 residing in app 108. Button 116 may be a physical button or a virtual button depending on a type of electronic device 102. In operation, the request is initiated by tapping and holding button 116 for the predefined time (e.g. 5 seconds).

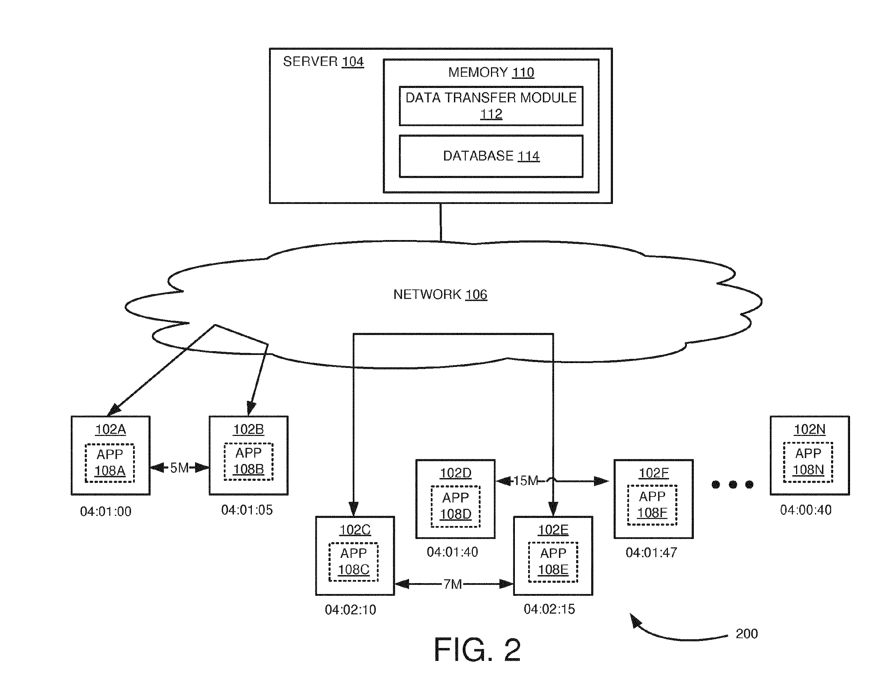

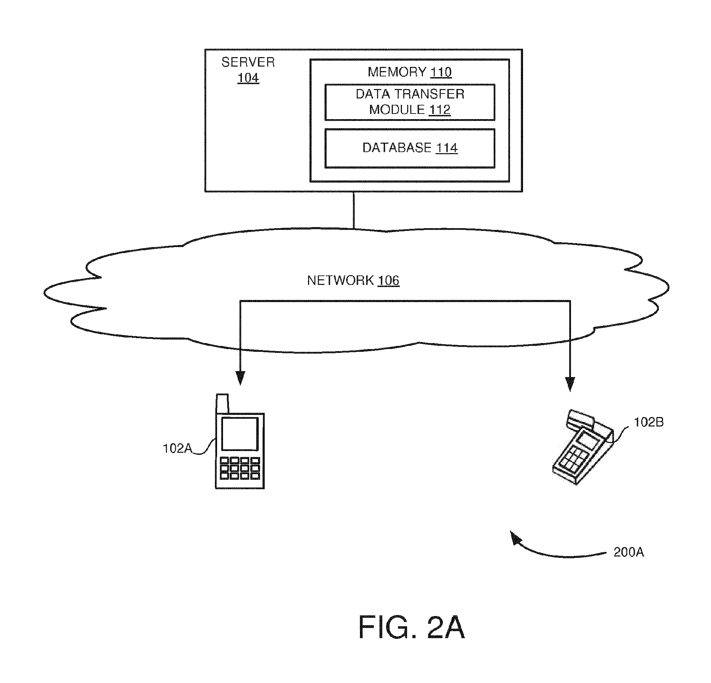

Referring now to FIG. 2, which is example system 200 illustrating pairing of electronic devices 102A-N based on the location information and the time of request, according to an embodiment. In operation, upon receiving the requests from electronic devices 102A-N (as explained in FIG. 1A), data transfer module 112 determines distances between electronic devices 102A-N based on the location information and determines time difference between the time of requests of electronic devices 102A-N. Further, data transfer module 112 establishes communication between electronic devices 102A-N by pairing electronic devices 102A-N that are within the predefined distance (e.g. 10 meters) and having the time difference less than the time interval(e.g. 10 seconds) using the IP address and the device ID associated with the electronic devices 102A-N. The pairing can be done for exchanging data between mobile devices, exchanging credit/debit card details between a mobile device and a swiping machine for payments, exchanging data between computing devices and mobile devices and so on. In one example, data transfer module 112 monitors electronic devices 102A-N that are paired and stores pairing information and data transferred between the electronic devices 102A-N in database 114.

In the example shown in FIG. 2A which illustrates pairing of a smart phone and a swipe machine based on location information and time of request, according to an embodiment. Consider electronic device 102A as a smart phone and electronic device 102B as a swiping machine. In this case, the communication is established between smart phone 102A and swiping machine 102B for payment of bills as shown in FIG. 2A. For example, data (e.g., credit/ debit card details) is transferred from smart phone 102A to swiping machine 102B using the app 108A running on smart phone 102A. In operation, a first request for communication is initiated by tapping and holding a button within app 108A for a predefined time (e.g., 5 seconds). Swiping machine 102B sends a second request for communication by tapping and holding a button within app 108B. The data transfer module 112 residing in server 104 receives the requests from smart phone 102A and swiping machine 102B and determines the location information, IP addresses, device IDs, and time of requests associated with the smart phone and the swiping machine.

Consider the time interval as 10 seconds and the predefined distance as 10 meters. In the example shown in FIG. 2, the first request from the smart phone is sent at 04:01:00 and the second request from the swiping machine is sent at 04:01:05. In this case, the time difference between the two requests is 5 seconds and is within the time interval. Further, the distance between the smart phone and the swiping machine is 5 meters, falling within the predefined distance. Therefore, the data transfer module 112 establishes communication by pairing the smart phone and the swiping machine using the associated IP addresses and device IDs. The smart phone then transfers the credit/debit card details to the swiping machine for processing the payment.

In another example shown in FIG. 2, consider electronic devices 102A and 102B as mobile phones. In this case, the mobile devices can share contact information, profile data, and so on by tapping and holding buttons within apps 108A and 108B for the predetermined time. In the example shown in FIG. 2, requests from the mobile phones 102A and 102B are sent at 04:01:00 and 04:01:05. In this case, time difference between the requests is 5 seconds and is within the time interval. Further as shown in FIG. 2, distance between the mobile phones is 5 meters and is less than the predefined distance. Therefore, data transfer module 112 establishes communication between the mobile phones to share the phone number and the profile details, which can be saved directly into phone books of the mobile phones without entering any other inputs such as phone number, e-mail id and the like.

In yet another example shown in FIGS. 1A and 2, consider electronic device 102C as a computer and electronic device 102E as a mobile phone. The computer and the mobile phone can exchange data, such as audio/video files, photos, text and the like using the apps 108C and 108E. In operation, a first request for communication is initiated by tapping and holding a button within app 108C running on the computer, for the predefined time of 5 seconds. The mobile phone sends a second request for communication by tapping and holding a button within app 108E, for the predefined time of 5 seconds. The data transfer module 112 receives the requests from the computer and the mobile phone. Data transfer module 112 then determines distance between the computer and the mobile phone and time difference between the first request and the second request using the location information and time of requests associated with computer and mobile phone.

In the example shown in FIG. 2, the first request is initiated at 04:02:10 and the second request is initiated at 04:02:15. In this case, the time difference between the two requests is 5 seconds and is within the time interval. Further, the distance between the computer and the mobile phone is 7 meters, falling within the predetermined distance. Therefore, data transfer module 112 establishes communication between the computer and the mobile phone to transfer the selected data from the computer to mobile phone or vice versa.

In yet another example shown in FIG. 2, consider the electronic devices 102D and 102F are mobile phones. As shown in FIG. 2, the requests from the mobile phones are initiated at 04:01:40 and 04:01:47, respectively. The time difference between the two requests is within the time interval. However, the distance between the mobile phones is 15 meters. Since the distance between the mobile phones is greater than the predefined distance (e.g., 10 meters), data transfer module 112 does not establish communication/share data between the mobile phones and a denial of the request is sent to the mobile phones.

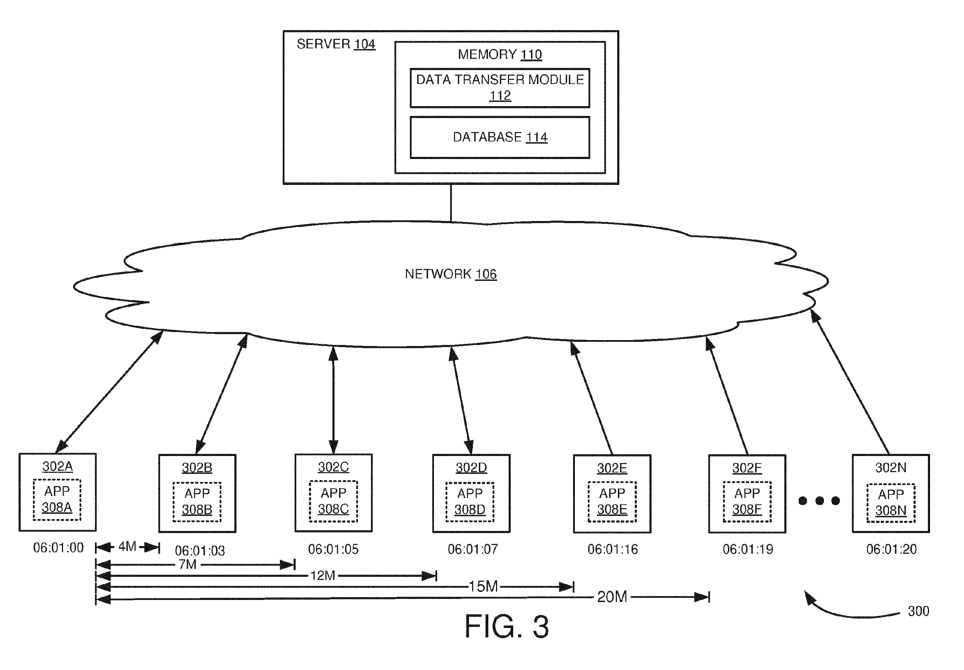

Referring now to FIG. 3, which is another example system 300 illustrating broadcasting data from electronic device 302A to multiple electronic devices 302B-N and vice versa via network 306, according to an embodiment. Particularly, system 300 includes server 304 having memory 310. Memory 310 further includes data transfer module 312 and database 314. In the example shown in FIG. 3, electronic device 302A initiates a request to broadcast data and electronic devices 302B-N initiates requests to receive the broadcasted data. The requests are initiated by tapping and holding buttons within apps 308A-N residing in electronic devices 302A-N, respectively, for a predefined time (e.g., 5 seconds). Data transfer module 312 sends the broadcasted data to electronic devices 302B-N based on time of requests and location information associated with electronic devices 302A-N.

In the example shown in FIG. 3, the request from electronic device 302A is initiated at 06:01:00 and requests from electronic devices 302B, 302C, 302D, 302E, 302F and 302N are initiated at 06:01:03, 06:01:05, 06:01:07, 06:01:16, 06:01:19, and 06:01:20 respectively. Further, consider, for example, a time interval as 15 seconds and a predefined distance as 15 meters. Data transfer module 312 establishes communication and transfers the broadcasted data from electronic device 302A to electronic devices 302B, 302C, and 302D since the time difference between the electronic device 302A and electronic devices 302B-D is less than the time interval and the distance between the electronic device 302A and electronic devices 302B-D is less than the predefined distance. However, the requests from electronic devices 302E-N are denied and a denial of requests is sent to electronic devices 302E-N since either the time difference between electronic device 302A and electronic devices 302E-N is greater than the time interval or the distance between the electronic device 302A and electronic devices 302EN is greater than the predefined distance or both. In this example, the details of the broadcasting, such as connection information between electronic devices 302A-N and the broadcasted data are stored in database 314.

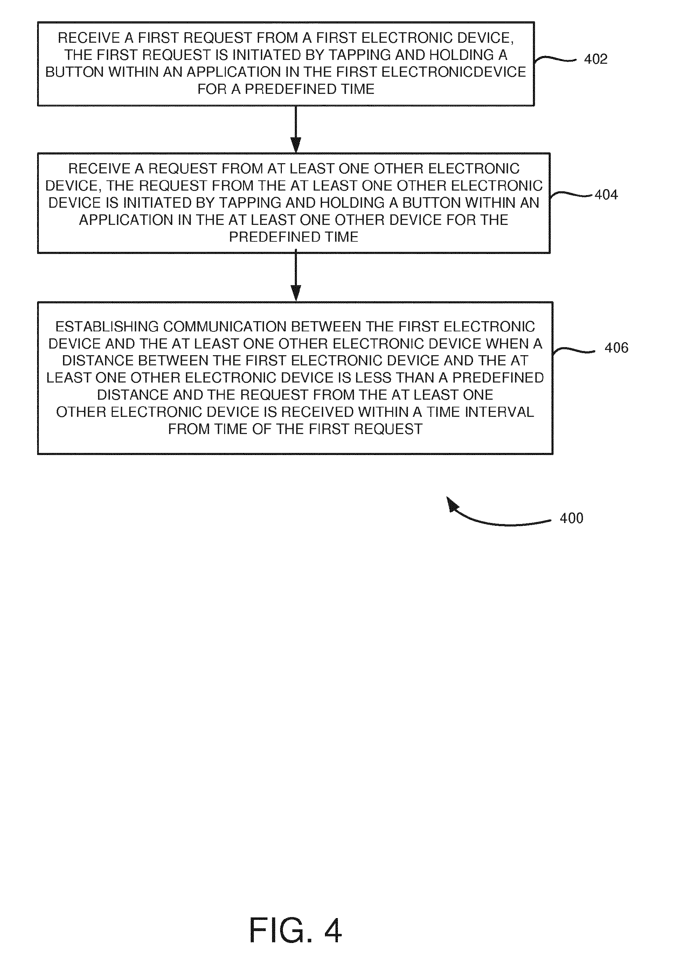

Referring now to FIG. 4, which is a flow chart 400 of an example method for establishing communication between electronic devices, according to an embodiment. At step 402, a first request from a first electronic device is received by a server. In one embodiment, the first request is initiated by tapping and holding a button within an application in the first electronic device for at least a predefined time. In one example, the predefined time is used broadly in the following description, however, it can also be used to refer to any other time interval. For example, the first request includes location information, time of first request, an IP address and a device ID associated with the first electronic device.

At step 404, a request from at least one other electronic device is received by the server. In one embodiment, the request from the at least one other electronic device is initiated by tapping and holding a button within an application in the at least one other electronic device for at least the predefined time. For example, the request from the other electronic device includes location information, time of request, an IP address and a device ID associated with the at least one other electronic device. Example electronic devices include mobile devices, computing devices and point of sale devices.

At step 406, communication is established between the first electronic device and the at least one other electronic device by the server when a distance between the first electronic device and the at least one other electronic device is less than a predefined distance and the request from the at least one other electronic device is received within a time interval from time of the first request. In other words, the communication is established between the first electronic device and one or more other electronic devices that are within the predefined distance from the first electronic device and sends requests within the time interval from time of the first request.

In one example, the communication is established between the first electronic device and the at least one other electronic device based on the IP addresses and the device IDs associated with the first electronic device and the at least one other electronic device. The communication is established between the first electronic device and the at least one other electronic device via a wireless network.

In one example, consider the at least one other electronic device includes a second electronic device. In this case, data is transferred between the first electronic device and the second electronic device when the distance between the first electronic device and the second electronic device is less than the predefined distance and the request from the second electronic device is received within the time interval from time of request from the first electronic device.

In another example, data can be broadcasted by a first electronic device. In this case, the server sends the broadcasted data to multiple electronic devices that are within the predefined distance from the first electronic device and initiates the requests within the time interval from time of request from the first electronic device.

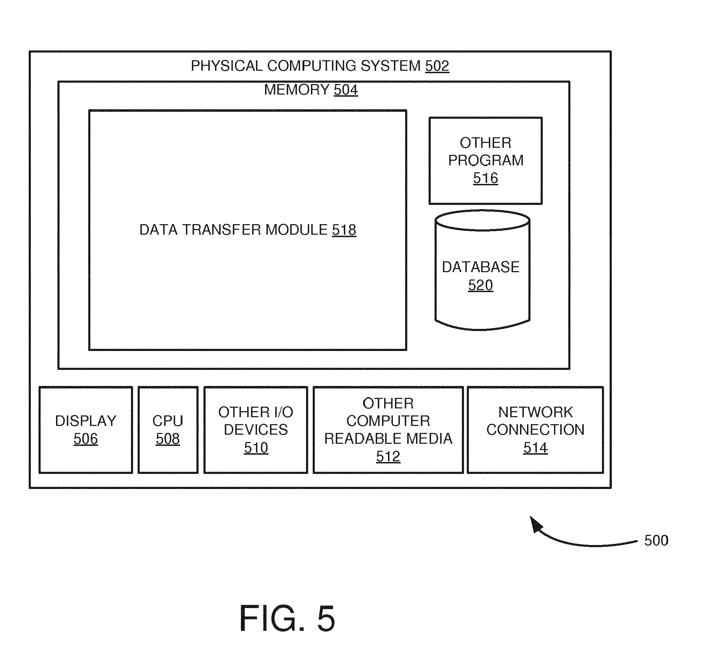

FIG 5. is block diagram 500 of an example physical computing system for establishing communication between electronic devices, such as server 104 shown in FIGS. 1A and 2 and server 304 shown in FIG. 3, according to an example embodiment. In particular, FIG. 5 shows physical computing system 502 that is utilized to implement data transfer module 518, such as data transfer modules 112 and 312 shown in FIGS. 1A, 2 and 3.

Note that one or more general purpose virtual or physical computer systems suitably instructed may be used to implement data transfer module518. In addition, physical computing system 502 may comprise one or more distinct computing systems/devices and may span distributed locations. Furthermore, each block shown may represent one or more such blocks as appropriate to a specific embodiment or may be combined with other blocks. Also, data transfer module 518 may be implemented in software, hardware, firmware, or in some combination to achieve the capabilities described herein.

In the embodiment shown, physical computing system 502 may comprise memory 504, display 506, one or more CPUs 508, input/output (I/O) devices 510 (e.g., keyboard, mouse, etc.), other computer-readable media 512, and network connections 514. Data transfer module 518 is shown residing in memory 504. Data transfer module 518 may execute on one or more CPUs 508 and implement techniques described herein. Other program 516 (e.g., an administrative interface, a Web server, and the like) and data repositories, such as data store 520, may also reside in memory 504, and execute on one or more CPUs 508. One or more of the components in FIG. 5 may not be present in any specific implementation. For example, some embodiments may not provide other computer readable media 512 or display 506.

Furthermore, in some embodiments, some or all of the components of data transfer module 518 may be implemented or provided in other manners, such as at least partially in firmware and/or hardware, including, but not limited to one or more application-specific integrated circuits ("ASICs"), standard integrated circuits, controllers executing appropriate instructions, and including microcontrollers and/or embedded controllers, field-programmable gate arrays ("FPGAs"), complex programmable logic devices ("CPLDs"), and the like. Some or all of the system components and/or data structures may also be stored as contents (e.g., as executable or other machine-readable software instructions or structured data) on a computer-readable medium (e.g., as a hard disk; a memory; a computer network or cellular wireless network or other data transmission medium; or a portable media article to be read by an appropriate drive or via an appropriate connection, such as a DVD or flash memory device) so as to enable or configure the computer-readable medium and/or one or more associated computing systems or devices to execute or otherwise use or provide the contents to perform at least some of the described techniques.

From the foregoing it will be appreciated that, although specific embodiments have been described herein for purposes of illustration, various modifications may be made without deviating from the spirit and scope of this disclosure. For example, the methods, techniques, and systems for establishing the communication via the network are applicable to other architectures or in other settings. Also, the methods, techniques, and systems discussed herein are applicable to differing protocols, communication media (optical, wireless, cable, etc.) and electronic devices (e.g., computers, wireless handsets, electronic organizers, personal digital assistants, tablet computers, mobile phone devices etc.).

## Claims

1. A method for establishing communication between electronic devices, comprising:
receiving a first request from a first electronic device by a server, wherein the first request is initiated by tapping and holding a button within an application in the first electronic device for at least a predefined time;
receiving a request from at least one other electronic device by the server, wherein the request from the at least one other electronic device is initiated by tapping and holding a button within an application in the at least one other electronic device for at least the predefined time; and
establishing communication between the first electronic device and the at least one other electronic device, by the server, when a distance between the first electronic device and the at least one other electronic device is less than a predefined distance and the request from the at least one other electronic device is received within a time interval from time of the first request.

2. The method of claim 1, wherein the first request comprises location information, the time of the first request, an Internet protocol (IP) address and a device identity (ID) associated with the first electronic device.

3. The method of claim 1, wherein the request from the at least one other electronic device comprises location information, time of the request, an IP address and a device ID associated with the at least one other electronic device.

4. The method of claim 1, wherein the communication is established between the first electronic device and the at least one other electronic device based on IP addresses and device IDs associated with the first electronic device and the at least one other electronic device.

5. The method of claim 1, wherein the communication is established between the first electronic device and the at least one other electronic device via a wireless network.

6. The method of claim 1, wherein the first electronic device and the at least one other electronic device are selected from the group consisting of mobile devices, computing devices and point of sale devices.

7. The method of claim 1, wherein the at least one other electronic device comprises a second electronic device.

8. The method of claim 7, wherein establishing communication between the first electronic device and the second electronic device comprises:
transferring data between the first electronic device and the second electronic device when the distance between the first electronic device and the second electronic device is less than the predefined distance and the request from the second electronic device is received within the time interval from the time of the first request.

9. The method of claim 1, wherein establishing communication between the first electronic device and the at least one another electronic device comprises:
broadcasting data by the first electronic device; and
receiving data by the at least one other electronic device when the distance between the first electronic device and the at least one other electronic device is less than the predefined distance and the request from the at least one other electronic device is received within the time interval from the time of the first request.

10. A system, comprising:
a plurality of electronic devices including an application, wherein the plurality of electronic devices comprises a first electronic device and at least one other electronic device; and
a server communicatively coupled to the plurality of electronic devices via a wireless network, wherein the server includes a data transfer module configured to:
receive a first request from the first electronic device, wherein the first request is initiated by tapping and holding a button within the application in the first electronic device for at least a predefined time;
receive a request from the at least one other electronic device, wherein the request from the at least one other electronic device is initiated by tapping and holding a button within the application in the at least one other electronic device for at least the predefined time; and
establish communication between the first electronic device and the at least one other electronic device when a distance between the first electronic device and the at least one other electronic device is less than a predefined distance and the request from the at least one other electronic device is received within a time interval from time of the first request.

11. The system of claim 10, wherein the first request comprises location information, the time of the first request, an Internet protocol (IP) address and a device identity (ID) associated with the first electronic device, and wherein the request from the at least one other electronic device comprises location information, time of the request, an IP address, and a device ID associated with the at least one other electronic device.

12. The system of claim 10, wherein the first electronic device and the at least one other electronic device are selected from the group consisting of mobile devices, computing devices and point of sale devices.

13. The system of claim 10, wherein the at least one other electronic device comprises a second electronic device.

14. The system of claim 13, wherein the data transfer module is configured to allow transfer of data between the first electronic device and the second electronic device when the distance between the first electronic device and the second electronic device is less than the predefined distance and request from the second electronic device is received within the time interval from the time of the first request.

15. The system of claim 10, wherein the first electronic device broadcasts data via the wireless network and wherein the at least one other electronic device receives the broadcasted data when the distance between the first electronic device and the at least one other electronic device is less than the predefined distance and the request from the at least one other electronic device is received within the time interval from the time of the first request.
